Europäisches Patentamt

(19) European Patent Office

Office européen des brevets

(11) Publication number: **0 298 892 B1**

# (12) EUROPEAN PATENT SPECIFICATION

(45) Date of publication of patent specification :
21.08.91 Bulletin 91/34

(51) Int. Cl.⁵ : **F02C 7/00, F16B 39/00**

(21) Application number : 88630123.3

(22) Date of filing : 05.07.88

(54) Locked threaded insert for high stress application.

(30) Priority : 08.07.87 US 70852

(43) Date of publication of application :
11.01.89 Bulletin 89/02

(45) Publication of the grant of the patent :
21.08.91 Bulletin 91/34

(84) Designated Contracting States :
DE FR GB

(56) References cited :
FR-A- 2 414 139
GB-A- 1 447 822
GB-A- 1 458 066
US-E- 27 143

(73) Proprietor : UNITED TECHNOLOGIES
CORPORATION
United Technologies Building 1, Financial
Plaza
Hartford, CT 06101 (US)

(72) Inventor : Frasca, Thomas
45 Griswold Road
Wethersfield Connecticut 06109 (US)

(74) Representative : Weydert, Robert et al
OFFICE DENNEMEYER S.à.r.l. P.O. Box 1502
L-1015 Luxembourg (LU)

## Description

The invention relates to threaded inserts for plates and in particular for inserts placed within plates having a high directional stress.

There are occasions when attachments must be bolted to plates with the plates having high stresses therein. The threads of a tapped hole create high stress concentrations and accordingly are unacceptable in such an environment. It therefore is known to provide unthreaded openings through the plate and to place threaded inserts therein. Note, for example, GB-A-1447822 and US-E-27143 which disclose a threaded insert arrangement as recited in the precharacterizing portion of claim 1. While the opening through the plate is larger, the absence of stress concentrations because of threads actually results in a lower stress level. Prior art inserts while not creating the stress concentrations of a threaded opening have produced stress concentrations because of the locking mechanisms used to prevent the insert from rotating when the accessory is bolted thereto, so in GB-A-1447822 referred to the shoulder of the insert is provided with circumferentially spaced projections which on assembly of the insert with a workpiece are pressed into the workpiece material. One end of the cylindrical body of the insert received in an opening in the workpiece is driven about its complete circumference into the workpiece material to lock the insert to the workpiece. The dimples formed by the projections and the sharp corners formed by the edge of the cylindrical body can cause stress concentrations especially in highly stressed areas of the workpiece. A similar insert is disclosed in US-E-27143, except that the spaced projections are replaced by a circumferential projection.

The object of the invention is to provide an insert of the recited type which can be held in the opening of the plate and restrained against rotation with a minimum of stress concentrations.

In accordance with the invention, to achieve this, there is provided a threaded insert arrangement for securing a threaded insert to a plate, said plate having a high main stress in a defined direction which is parallel to its surface, a cylindrical opening through said plate, an insert having a cylindrical body, an internal longitudinally extending threaded bore, and a shoulder extending radially beyond said cylindrical body for abutment with said plate, and locking means to prevent rotational and axial relative movement between the insert and the plate, characterized in that said locking means comprises a restraining recess in said plate contiguous with said cylindrical opening and extending outwardly from the bore in a radial direction which is parallel to the said defined direction of said main stress, and a radially extending portion of said insert, located on the end of the cylindrical body opposite the shoulder, so as to be deformably locatable into said restraining recess for engagement with said recess.

Embodiments of the invention will now be described with reference to the accompanying drawings, wherein :

Figure 1 shows a fuel nozzle mounted in a highly stressed plate.

Figure 2 is a detail of the mounting of the fuel nozzle.

Figure 3 is a detail from the bolted side of the connection showing the orientation of the restraining recesses with respect to the stress field.

Figure 4 is a section through the threaded insert.

Figure 5 is a view of the recess.

Figure 6 is an alternate view using two recesses.

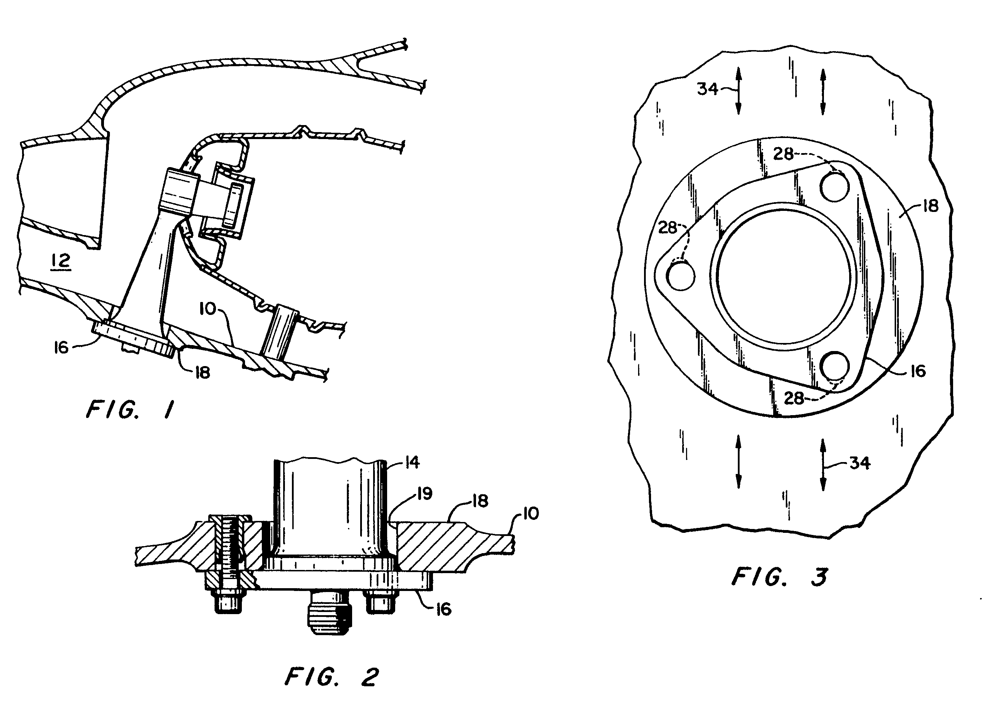

Figure 1 illustrates the combustor area of a gas turbine engine wherein combustor shell 10 contains high temperature high pressure air 12 in the order of 3.1 Mpa (450 psi) pressure and 538°C (1000°F) temperature. A fuel injector 14 secured to flange 16 must be bolted into place during construction. For this purpose the combustion shell 10 has a thickened portion 18 with openings therein for the purpose of bolting flange 16 thereto.

Because of the high internal pressure the combustor shell 10 including the thickened portion 18 is highly stressed in the hoop stress direction while stresses are much lower in the other direction. This is particularly so since it is desirable to keep this shell as thin as possible not only to save weight but to avoid stresses caused by thermal transients.

The shell must have a large opening 19 for receiving the fuel injector in addition to whatever openings are required for bolting purposes. The opening 19 through the shell is unavoidable and causes a stress pattern flow around the opening which creates stresses higher than those already existing. While thickening of the material locally provides some relief, it is still of critical importance to avoid any unnecessary stress concentrations which could start local cracking which would propagate to ultimate failure. Threading the openings through the shell would create such unacceptable stress concentrations.

A cylindrical opening 20 is placed through plate 18 at each location where a bolted connection is desired. An insert 22 having a cylindrical body is placed within opening 20 and formed to have a tight fit. Such tight fit is an interference fit of 0.0127-0.0088 mm (0.0005 to 0.00035 inches). The insert has a threaded bore 24 longitudinally extending through the insert. It has a shoulder 26 extending beyond the cylindrical body for abutment with plate 18 to secure the insert in that direction not only prior to bolting on the fuel injector but in resisting the force created by the bolting.

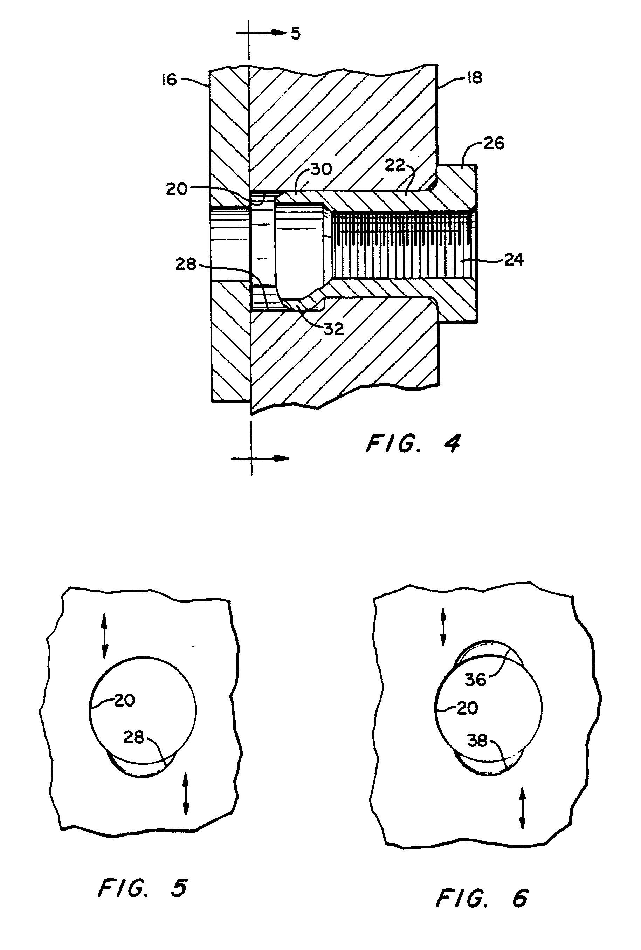

As best seen at Figure 5 the cylindrical opening 20 has contiguous therewith a partial cylindrical recess 28. An unthreaded cylindrical extension 30 is located adjacent to the recess and a portion 32 is deformed into the recess. The insert is thereby retained from falling out and also capable of resisting rotation when an attachment is bolted thereto.

Figure 3 shows the direction of the high hoop stress 34. It is essential that these recesses 28 be in line with the stress path as illustrated by the three openings in Figure 3. A high stress occurs at the portion of the material adjacent to the openings where the side of the opening is parallel to the stress field. Low stresses exist at the points 90 degrees therefrom. Accordingly, the recess for holding the insert and preventing rotation is placed only at these low stress conditions. Accordingly, an insert is provided which may be held and restrained with a minimum of stress concentrations.

Figure 6 shows an alternate embodiment having two recesses 36 and 38 which are located 180 degrees apart. Both of these recesses are, however, only in line with the known high directional stress.

## Claims

1. Threaded insert arrangement for securing a threaded insert to a plate, said plate having a high main stress in a defined direction which is parallel to its surface, a cylindrical opening (20) through said plate (18), an insert (22) having a cylindrical body, an internal longitudinally extending threaded bore (24), and a shoulder (26) extending radially beyond said cylindrical body for abutment with said plate (18), and locking means to prevent rotational and axial relative movement between the insert (22) and the plate (18), characterized in that said locking means comprises :

    a restraining recess (28 ; 36) in said plate (18) contiguous with said cylindrical opening (20) and extending outwardly from the bore (20) in a radial direction which is parallel to the said defined direction of said main stress, and ;

    a radially extending portion (32) of said insert, located on the end of the cylindrical body opposite the shoulder (26), so as to be deformably locatable into said restraining recess (28 ; 36) for engagement with said recess.

2. Threaded insert arrangement according to claim 1, characterized in that said restraining recess (28 ; 36) comprises a recess only partly through the thickness of said plate (18) and having an edge in the form of a partial cylinder.

3. Threaded insert arrangement according to claim 1, characterized in that

    said insert (22) has an unthreaded extension (30) extending beyond said threads at the end opposite said shoulder (26) ;

    said extension (30) being located adjacent said retaining recess (28 ; 36) when said insert (22) is placed within said cylindrical opening (20) ; and

    at least a portion of said extension (30) being deformed into said recess (28 ; 36).

4. Threaded insert arrangement according to claim 3, characterized in that said unthreaded extension (30) is cylindrical.

5. Threaded insert arrangement according to claim 1, characterized in that a second restraining recess (38) contiguous with said cylindrical opening (20) is located 180 degrees from the other restraining recess (36), whereby both recesses (36, 38) are located only in line with said directional stress.

## Patentansprüche

1. Gewindeeinsatzanordnung zum Befestigen eines Gewindeeinsatzes an einer Platte, wobei die Platte eine hohe Hauptbeanspruchung in einer definierten Richtung hat, die parallel zu ihrer Oberfläche ist, mit einer zylindrischen Öffnung (20) in der Platte (18), einem Einsatz (22), der einen zylindrischen Körper hat, eine innere, sich in Längsrichtung erstreckende Gewindebohrung (24) und eine Schulter (26), die sich radial über den zylindrischen Körper hinaus erstreckt, zur Anlage an der Platte (18), und einer Verriegelungseinrichtung zum Verhindern von Dreh- und axialer Relativbewegung zwischen dem Einsatz (22) und der Platte (18), dadurch gekennzeichnet, daß die Verriegelungseinrichtung aufweist :

    eine Halteausnehmung (28 ; 36) in der Platte (18) angrenzend an die zylindrische Öffnung (20) und sich von der Bohrung (20) aus in radialer Richtung, die parallel zu der definierten Richtung der Hauptbeanspruchung ist, nach außen erstreckend ;

    einen sich radial erstreckenden Teil (32) des Einsatzes, der an dem Ende des zylindrischen Körpers angeordnet ist, welcher zu der Schulter (26) entgegengesetzt ist, so daß er verformbar in die Halteausnehmung (28 ; 36) einführbar ist, um mit der Ausnehmung in Eingriff zu gelangen.

2. Gewindeeinsatzanordnung nach Anspruch 1, dadurch gekennzeichnet, daß die Halteausnehmung (28 ; 36) eine Ausnehmung ist, die sich nur teilweise durch die Dicke der Platte (18) erstreckt und einen Rand in Form eines Teilzylinders hat.

3. Gewindeeinsatzanordnung nach Anspruch 1, dadurch gekennzeichnet, daß

    der Einsatz (22) einen gewindefreien Fortsatz (30) hat, der sich über das Gewinde an dem zu der Schulter (26) entgegengesetzten Ende hinaus erstreckt ;

    der Fortsatz (30) benachbart zu der Halteausnehmung (28 ; 36) angeordnet ist, wenn der Einsatz (22) in der zylindrischen Öffnung (20) plaziert ist; und

    wenigstens ein Teil des Fortsatzes (30) in die Ausnehmung (28 ; 36) hinein verformt wird.

4. Gewindeeinsatzanordnung nach Anspruch 3, dadurch gekennzeichnet, daß der gewindefreie Fortsatz (30) zylindrisch ist.

5. Gewindeeinsatzanordnung nach Anspruch 1, dadurch gekennzeichnet, daß eine zweite Halteausnehmung (38), die an die zylindrische Öffnung (20) angrenzt, 180 Grad entfernt von der anderen Halteausnehmung (36) angeordnet ist, wodurch beide Ausnehungen (36, 38) nur in einer Linie mit der gerichteten Beanspruchung angeordnet sind.

**Revendications**

1. Agencement d'inserts taraudés pour fixer un insert taraudé à une plaque, ladite plaque supportant une contrainte principale élevée dans une direction définie qui est parallèle à sa surface, une ouverture cylindrique (20) à travers ladite plaque (18), un insert (22) comportant un corps cylindrique, un trou taraudé s'étendant dans le sens longitudinal (24) et un épaulement (26) s'étendant dans le sens radial au-delà dudit corps cylindrique pour venir en butée avec ladite plaque (18) et un moyen de blocage servant à empêcher un mouvement relatif rotationnel et axial entre l'insert (22) et la plaque (18), caractérisé en ce que ledit moyen de blocage comprend :

un évidement de retenue (28 ; 36) ménagé dans ladite plaque (18) contiguë à ladite ouverture cylindrique (20) et s'étendant vers l'extérieur depuis le trou (20) dans une direction radiale qui est parallèle à ladite direction définie de ladite contrainte principale, et

une partie s'étendant dans le sens radial (32) dudit insert située sur l'extrémité du corps cylindrique à l'opposé de l'épaulement (26) de façon à pouvoir être placée en étant déformée dans ledit évidement de retenue (28 ; 36) pour engagement avec ledit évidement.

2. Agencement d'inserts taraudés selon la revendication 1, caractérisé en ce que ledit évidement de retenue (28 ; 36) comprend un évidement ménagé seulement partiellement dans l'épaisseur de ladite plaque (18) et présentant un bord en forme de cylindre partiel.

3. Agencement d'inserts taraudés selon la revendication 1, caractérisé en ce que

ledit insert (22) comporte un prolongement non taraudé (30) s'étendant au-delà desdits filets à l'extrémité opposée audit épaulement (26) ;

ledit prolongement (30) étant situé de manière adjacente audit évidement de retenue (28 ; 36) lorsque ledit insert (22) est placé à l'intérieur de ladite ouverture cylindrique (20), et

au moins une partie dudit prolongement (30) étant déformée dans ledit évidement (28 ; 36).

4. Agencement d'inserts taraudés selon la revendication 3, caractérisé en ce que ledit prolongement non taraudé (30) est cylindrique.

5. Agencement d'inserts taraudés selon la revendication 1 caractérisé en ce qu'un second évidement de retenue (38) contigu à ladite ouverture cylindrique (20) est situé à 180° de l'autre évidement de retenue (36), d'où il résulte que les deux évidements (36, 38) sont situés seulement en alignement avec ladite contrainte directionnelle.

FIG. 3

FIG. 1

FIG. 2

FIG. 4

FIG. 5

FIG. 6